# EUROPEAN PATENT APPLICATION

(11) **EP 4 811 479 A1**
(43) Date of publication of application: **23.09.2026**
(21) Application number: 25305394.6
(22) Date of filing: 21.03.2025
(51) Int. Cl.: H01M 10/0525, H01M 50/414, H01M 50/42, H01M 50/423, H01M 50/426, H01M 50/443, H01M 50/449, H01M 50/451

(54) **POLYMER COATED POROUS SEPARATOR FOR SECONDARY BATTERY**

(71) Applicant: Arkema France, 92800 Puteaux (FR)
(72) Inventor: BEAUME, François, 69490 Pierre-Benite (FR); FUKUYAMA, Takehiro, Kyoto 600-8815 (JP); YASUDA, Maho, Kyoto 600-8815 (JP); PINEAU, Quentin, 27470 Serquigny (FR)
(74) Representative: Arkema Patent

(57) **Abstract**

The present invention relates to a coating useful for a separator of a secondary battery and comprising at least one copolyamide. The present invention also relates to a separator comprising said coating.

## Description

### Technical field

The present invention relates generally to the field of electrical energy storage in rechargeable secondary batteries of Li-ion type. More specifically, the invention relates to a composition suitable for use as a coating in a separator.

### Background of the invention

The market for separators for electrochemical devices is dominated by the use of polyolefins (e.g. Celgard^{®} or Hipore^{®}) produced by extrusion and/or stretching via dry or wet processes. Separators must have low thicknesses, optimal affinity for the electrolyte and sufficient mechanical and temperature strength. Among the most interesting alternatives to polyolefins, polymers with a better affinity vis-à-vis standard electrolytes have been proposed, in order to reduce the internal resistances of the system, such as poly(methylmethacrylate) (PMMA), poly(vinylidene fluoride) (PVDF) and poly(vinylidene-hexafluoropropene-fluoride) (P(VDF-co-HFP)).

Alternative polymers such as polyamides has also been disclosed. Polyamides are used in various industries and known to have good resistance to chemicals. But it was not possible to make a thin uniform coating on separators using polyamide to benefit from the chemical resistance because it was not soluble in common solvents. For example, US 11,664,558 mentions the use of Orgasol^{®}, which is a polyamide powder, in the coating layer of separators for lithium-ion batteries. Orgasol^{®} is dispersed, not dissolved, into water in order to form a coating solution for porous separators. Once applied on the porous support of the separator, the coating is inhomogeneous. It is also known from US 11,482,758 the use of polyamide in the separator as well but the polyamide is a membrane substrate that would be high in thickness increasing the overall battery resistivity.

Therefore, there is a need for new coatings showing good uniformity on the support without increasing the thickness largely, leading to lower resistivity compared to known polyamides when they are applied by different methods.

### Summary of the invention

In a first aspect, the present invention relates to a coating for separator of a secondary battery comprising at least one copolyamide comprising at least two different repetitive units derived from **M1** and **M1',** wherein **M1** is of formula (Ca diamine **DA1).(Cb** diacid **DA2)** and **M1'** is selected from the group consisting of an amino acid, a lactam and a formula (Ca' diamine **DA1').**(Cb' diacid **DA2');**
wherein a and a' represent the number of carbon atoms of the diamine ;
b and b' represent the number of carbon atoms of the diacid ;
a and b each being independently from 8 to 50 ;
a' and b' each being independently from 4 to 36 ;
wherein the diamine **DA1** is a secondary diamine comprising two amine groups, wherein both amine groups are secondary amine groups with two substituents different from hydrogen bound to the nitrogen atom.

As disclosed in the present application, the coating of the present invention is uniform once applied on the support of the separator. This is achieved using the specific copolyamides disclosed in the present application. An uniform and thin coating is obtained allowing to lower the resistivity compared to known separators. Furthermore, an uniform coating improves the ionic conductivity throughout the whole separator.

In a preferred embodiment, the Ca diamine DA1 is selected from the group consisting of piperazine, 4,4'-trimethylenepiperidine, 4,4'-methylenebis(N-1-methylpropyl) cyclohexanamine, 4,4'-methylenebis(N-1-methylpropyl)-3,3'-dimethylcyclohexanamine, 3,3,5-trimethyl-N-(propan-2-yl)-5-[(propan-2-ylamino)methyl]cyclohexamine and N,N'-di(3,3-dimethyl-2-butyl)-1,6-diaminohexane).

In a preferred embodiment, the Cb diacid **DA2** is selected from the group consisting of aliphatic diacids, which may be linear or branched, cycloaliphatic diacids and aromatic diacids.

In a preferred embodiment, **M1'** is an amino acid selected from the group consisting of 9-aminononanoic acid, 10-aminodecanoic acid, 10-aminoundecanoic acid, 11-aminoundecanoic acid and 12-aminododecanoic acid, as well as its derivatives, notably N-heptyl-11-aminoundecanoic acid.

In another preferred embodiment, **M1'** is a lactam selected from the group consisting of pyrrolidinone, 2-piperidinone, caprolactam, enantholactam, caprylolactam, pelargolactam, decanolactam, undecanolactam, and lauryllactam.

In another preferred embodiment, **M1'** is of formula (Ca' diamine **DA1').(**Cb' diacid **DA2')** wherein **DA1'** is selected from the group consisting of a linear or branched aliphatic diamine, a cycloaliphatic diamine, or an alkylaromatic diamine ; **DA2'** is selected from the group consisting of aliphatic diacids, which may be linear or branched, cycloaliphatic diacids and aromatic diacids and is different from **DA2.**

In a preferred embodiment, said copolyamide comprises at least two different repetitive units derived from **M1** and **M1'** at a proportion by weight from 5 to 60% by weight, and preferably from 10 to 50 % by weight relative to all the polyamide units.

In a preferred embodiment, said copolyamide have a melt volume-flow rate (MVR) at 160°C under 2.16 kg from 2 to 300 cm³/10 min.

In a preferred embodiment, said coating further comprises a polymer **P2** selected from the group consisting of fluoropolymers, polyacrylamide, polyacrylonitrile, ABS or SBR polymers, acrylic-based polymers, copolymers of vinylidene fluoride and functionalized vinyl monomer.

In a second aspect, the present invention relates to a separator for secondary battery comprising the coating according to the present invention.

In a preferred embodiment, said separator comprises a porous support onto which a layer **L1** comprising said coating according to the present invention is applied.

In a preferred embodiment, said layer **L1** further comprises inorganic particles.

In another embodiment, the separator comprises a base layer **L1'** and a top layer **L2'** applied onto the base layer **L1';** wherein the base layer **L1'** comprises a porous support onto which a binder and optionally inorganic particles is applied and wherein the top layer **L2'** comprises said coating according to the present invention.

In a preferred embodiment, said top layer **L2'** has a thickness of less than 5 µm or said layer **L1** has a thickness of less than 5 µm.

In another aspect, the present invention provides a secondary battery comprising a cathode, an anode and a separator disposed between the anode and the cathode, said separator being according to the present invention.

### Detailed description of the invention

In a first aspect of the present invention, a coating is provided. The coating can be used in a separator of a secondary battery. The coating comprises at least one copolyamide. Said copolyamide comprises at least two different repetitive units derived from **M1** and **M1'.**

**M1** is of formula (Ca diamine **DA1).**(Cb diacid **DA2),** wherein the diamine **DA1** is a secondary amine.

By "secondary diamine" is meant a compound comprising two amine groups, and wherein both amine groups are secondary amine groups (in other words wherein two substituents different from hydrogen are bound to the nitrogen atom). The formula (Ca diamine DA1).**(Cb** diacid **DA2)** can also be represented by the formula X.Y wherein X corresponds to the Ca diamine **DA1** while Y corresponds to the Cb diacid **DA2.** In this formula, a represents the number of carbon atoms of the diamine and b represents the number of carbon atoms of the diacid, "a" and "b" each being independently from 8 to 50, and preferably from 8 to 18. For example, the number of carbons in the amine Ca **DA1** may be from 4 to 26. In addition, the number of carbons in the Cb diacid **DA2** may be from 4 to 24.

The secondary Ca diamine **DA1** may be in particular a cycloaliphatic amine.

The secondary Ca diamine **DA1** may be selected from the group consisting of piperazine, 4,4'-trimethylenepiperidine, 4,4'-methylenebis(N-1-methylpropyl) cyclohexanamine, 4,4'-methylenebis(N-1-methylpropyl)-3,3'-dimethylcyclohexanamine, 3,3,5-trimethyl-N-(propan-2-yl)-5-[(propan-2-ylamino)methyl]cyclohexamine and N,N'-di(3,3-dimethyl-2-butyl)-1,6-diaminohexane).

According to preferred embodiments, the secondary Ca diamine **DA1** is piperazine.

The Cb diacid **DA2** may be selected from the group consisting of aliphatic diacids, which may be linear or branched, cycloaliphatic diacids and aromatic diacids.

In case the Cb diacid **DA2** is aliphatic and linear, it may preferably be selected from the group consisting of succinic acid (b = 4), pentanedioic acid (b = 5), adipic acid (b = 6), heptanedioic acid (b = 7), octanedioic acid (b = 8), azelaic acid (b = 9), sebacic acid (b = 10), undecanedioic acid (b = 11), dodecanedioic acid (b = 12), brassylic acid (b = 13), tetradecanedioic acid (b = 14), hexadecanedioic acid (b = 16), octadecanedioic acid (b = 18), octadecenedioic acid (b = 18), eicosanedioic acid (b = 20), docosanedioic acid (b = 22).

In case the Cb diacid **DA2** is cycloaliphatic, it may contain the following carbon skeletons: norbornyl methane, cyclohexylmethane, dicyclohexylmethane, dicyclohexylpropane, di (methylcyclohexyl), di (methylcyclohexyl) propane.

In case the Cb diacid **DA2** is aromatic, it is preferably selected from the group consisting of terephthalic acid (denoted T), isophthalic (denoted I) and naphthalene diacids, in particular isophthalic acid.

The copolyamide further comprises at least one other unit obtained derived from **M1'** selected from the group consisting of an amino acid, a lactam, and a formula (Ca' diamine **DA1**').(Cb' diacid **DA2').**

As mentioned above, **M1'** can be an amino acid. Preferably, the amino acid is selected from the group consisting of 9-aminononanoic acid, 10-aminodecanoic acid, 10-aminoundecanoic acid, 11-aminoundecanoic acid and 12-aminododecanoic acid, as well as its derivatives, notably N-heptyl-11-aminoundecanoic acid.

Alternatively, **M1'** is a lactam. Preferably, the lactam is selected from the group consisting of pyrrolidinone, 2-piperidinone, caprolactam, enantholactam, caprylolactam, pelargolactam, decanolactam, undecanolactam, and lauryllactam.

Alternatively, **M1'** is of formula (Ca' diamine **DA1').(**Cb**'** diacid **DA2').** The term a' represents the number of carbon atoms of the diamine **DA1'** and b' represents the number of carbon atoms of the diacid **DA2',** a' and b' being each independently from 4 to 36, and preferably from 6 to 18.

In addition, in case the copolyamide comprises units corresponding to the formula (Ca' diamine **DA1').(**Cb**'** diacid **DA2'),** (Cb' diacid **DA2')** is different than (Cb diacid **DA2).**

The Ca' diamine **DA1'** may be selected from the group consisting of a linear or branched aliphatic diamine, a cycloaliphatic diamine, or an alkylaromatic diamine.

In case the Ca' diamine **DA1'** is aliphatic and linear, of formula H2N-(CH2)a'-NH2, the Ca' diamine **DA1'** is preferably chosen from butanediamine (a = 4), pentanediamine (a = 5), hexanediamine (a = 6), heptanediamine (a = 7), octanediamine (a = 8), nonanediamine (a = 9), decanediamine (a = 10), undecanediamine (a = 11), dodecanediamine ( a = 12), tridecanediamine (a = 13), tetradecanediamine (a = 14), hexadecanediamine (a = 16), octadecanediamine (a = 18), octadecenediamine (a = 18), eicosanediamine (a = 20), docosanediamine (a = 22) and diamines obtained from fatty acids.

In case the Ca' diamine **DA1'** is aliphatic and branched, it may contain one or more methyl or ethyl substituents on the main chain. For example, the Ca' diamine **DA1'** can advantageously be chosen from 2,2,4-trimethyl-1,6-hexanediamine, 2,4,4-trimethyl-1,6-hexanediamine, 1,3- diaminopentane, 2-methyl-1,5-pentanediamine, 2-methyl-1,8-octanediamine.

In case the Ca' diamine **DA1'** is cycloaliphatic, it is preferably chosen from piperazine, an aminoalkylpiperazine, bis (3,5-dialkyl-4-aminocyclohexyl) methane, bis (3,5-dialkyl-4-aminocyclohexyl) ethane, bis (3,5-dialkyl-4-aminocyclo-hexyl) propane, bis(3,5-dialkyl-4-aminocyclo-hexyl) butane, bis-(3-methyl-4-aminocyclohexyl)-methane (BMACM or MACM), p-bis (aminocyclohexyl)-methane (PACM) and isopropylidenedi(cyclohexylamine) (PACP). It can also include the following carbon skeletons: norbornyl methane, cyclohexylmethane, dicyclohexylpropane, di (methylcyclohexyl), di (methylcyclohexyl) propane.

A non-exhaustive list of these cycloaliphatic diamines is given in the publication "Cycloaliphatic Amines" (Encyclopaedia of Chemical Technology, Kirk-Othmer, 4th Edition (1992), pp. 386-405).

In case the Ca' diamine **DA1'** is alkylaromatic, it is preferably chosen from 1,3-xylylene diamine and 1,4-xylylene diamine.

The Cb' diacid **DA2'** may be chosen from aliphatic diacids, which may be linear or branched, cycloaliphatic diacids and aromatic diacids.

In case the Cb' diacid **DA2'** is aliphatic and linear, it may preferably be chosen from succinic acid (b = 4), pentanedioic acid (b = 5), adipic acid (b = 6), heptanedioic acid (b = 7), octanedioic acid (b = 8), azelaic acid (b = 9), sebacic acid (b = 10), undecanedioic acid (b = 11), dodecanedioic acid (b = 12), brassylic acid (b = 13), tetradecanedioic acid (b = 14), hexadecanedioic acid (b = 16), octadecanedioic acid (b = 18), octadecenedioic acid (b = 18), eicosanedioic acid (b = 20), docosanedioic acid (b = 22).

In case the Cb' diacid **DA2'** is cycloaliphatic, it may contain the following carbon skeletons: norbornyl methane, cyclohexylmethane, dicyclohexylmethane, dicyclohexylpropane, di (methylcyclohexyl), di (methylcyclohexyl) propane.

In case the Cb' diacid **DA2'** is aromatic, it is preferably chosen from terephthalic acid (denoted T), isophthalic (denoted I) and naphthalene diacids, in particular isophthalic acid.

According to preferred embodiments, the polyamide may be chosen from Pip.9/Pip.12/11 (Pip=piperazine, 9=azelaic acid, 11=undecanedioic acid, 12=dodecanedioic acid), Pip.10/11 (10=sebacic acid), Pip.10/12, Pip.10/11/Pip.9, 6.10/Pip.10/Pip.12 (6=adipic acid), Pip.10 and Pip.12.

According to some embodiments, said copolyamide comprises at least two different repetitive units derived from **M1** and **M1'** at a proportion by weight from 5 to 60% by weight, and preferably from 10 to 50 % by weight relative to all the polyamide units.

Furthermore, the copolyamide may have a melt volume-flow rate (MVR) at 160°C under 2.16 kg from 2 to 300 cm3/10 min, preferably from 3 to 250 cm3/10 min, more preferably from 4 to 200 cm3/10 min, more preferably from 5 to 150 cm3/10 min, more preferably from 5 to 100 cm3/10 min and even more preferably from 5 to 50 cm3/10 min. The MVR is measured using according to the ISO 1133 standard. The copolyamide is provided in powder form. This powder form may be obtained by grinding the polyamide, preferably under liquid nitrogen.

The copolyamide may have a melting temperature measured by DSC ranging from 90°C to 200°C, preferably from 90 to 160°C.

The coating according to the present invention is prepared by dissolving the copolyamide as defined in the present invention in an organic solvent. The copolyamide is therefore preferably soluble in various organic solvents which is useful for the preparation of the separator according to the present invention. Preferably, the copolyamide as defined in the present invention and used in the process for preparing the coating of the present invention is preferably in powder form.

In an embodiment, said copolyamide in powder form has a particle size distribution Dv50 lower than 60 µm, advantageously lower than 55 µm, preferably lower than 50 µm, more preferably lower than 45 µm, most preferably lower than 40 µm, in particular lower than 35 µm. In a preferred embodiment, said copolyamide has a particle size distribution Dv50 lower than 30 µm, advantageously lower than 28 µm, preferably lower than 26 µm, more preferably lower than 24 µm, most preferably lower than 22 µm, in particular lower than 20 µm, more particularly lower than 18 µm, most particularly lower than 16 µm. In a preferred embodiment, said copolyamide in powder form has a particle size distribution Dv50 lower than 14 µm, advantageously lower than 12 µm, preferably lower than 10 µm. The Dv50 is the particle size at the 50th percentile (in volume) of the cumulative size distribution of particles. This parameter is determined by laser granulometry. A Malvern INSITEC System particle size analyzer is used for the measurement. This is done in the dry process by laser diffraction on a powder with a focal of 100 mm. This applies to all Dv50 recited in the present description.

In a preferred embodiment, said copolyamide in powder form has a particle size distribution Dv90 lower than 500µm, advantageously lower than 450 µm, preferably lower than 400 µm, more preferably lower than 350 µm, most preferably lower than 300 µm, in particular lower than 250 µm, more particularly lower than 200 µm, most particularly lower than 150 µm. In a preferred embodiment, said copolyamide in powder form has a particle size distribution Dv90 lower than 100 µm, advantageously lower than 50 µm, preferably lower than 20 µm. The Dv90 is the particle size at the 90th percentile (in volume) of the cumulative size distribution of particles. This parameter is determined by laser granulometry. A Malvern INSITEC System particle size analyzer is used for the measurement. This is done in the dry process by laser diffraction on a powder with a focal of 100 mm. This applies to all Dv90 recited in the present description. In addition to the copolyamide as described herein, the coating may further comprise a polymer **P2.** The latter may be selected from the group consisting of fluoropolymers, polyacrylamide, polyacrylonitrile, ABS or SBR polymers, acrylic-based polymers, copolymers of vinylidene fluoride and functionalized vinyl monomer or mixture thereof.

Fluoropolymers are polymers comprising repetitive units derived from a monomer **M1** selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF2=CFOCF2CF(CF3)OCF2CF2X wherein X is SO2F, CO2H, CH2OH, CH2OCN or CH2OPO3H; a monomer of formula CF2=CFOCF2CF2SO2F; a monomer of formula F(CF2)nCH2OCF=CF2 wherein n is 1, 2, 3, 4 or 5; a monomer of formula R1CH2OCF=CF2 wherein R1 is hydrogen atom or F(CF2)m and m is 1, 2, 3 or 4; a monomer of formula R2OCF=CH2 wherein R2 is F(CF2)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof. Among the trifluoropropenes mention may be mentioned 3,3,3-trifluoropropene. Among the tetrafluoropropenes include 2,3,3,3-tetrafluoropropene, 1,3,3,3-tetrafluoropropene. Among the pentafluoropropene include 1,1,3,3,3-pentafluoropropene or 1,2,3,3,3-pentafluoropropene. Chlorofluoroethylene may refer to either 1-chloro-1-fluoroethylene or 1-chloro-2-fluoroethylene. The isomer 1-chloro-1-fluoroethylene is preferred. Chlorotrifluoropropene is preferably 1-chloro-3,3,3-trifluoropropene or 2-chloro-3,3,3-trifluoropropene. Preferably, fluoropolymers are polymers comprising repetitive units derived from a monomer **M1** selected from the group consisting of vinylidene fluoride, hexafluoropropene, tetrafluoroethylene, chlorotrifluoroethylene, and trifluoroethylene. More preferably, fluoropolymers are homopolymers of vinylidene fluoride or copolymers of vinylidene fluoride and a monomer **M1'** selected from the group consisting of trifluoroethylene, chlorotrifluoroethylene, tetrafluoroethylene and hexafluoropropylene or a mixture thereof; in particular **M1'** is hexafluoropropylene. Fluoropolymers may be a copolymer of hexafluoropropylene and vinylidene fluoride, a copolymer of trifluoroethylene and vinylidene fluoride, a copolymer of vinylidene fluoride and tetrafluoroethylene, a copolymer of vinylidene fluoride and chlorotrifluoroethylene, a terpolymer of vinylidene fluoride, chlorotrifluoroethylene and tetrafluoroethylene, a terpolymer of vinylidene fluoride, chlorotrifluoroethylene and trifluoroethylene, a terpolymer of vinylidene fluoride, trifluoroethylene and hexafluoropropene, a terpolymer of vinylidene fluoride, tetrafluoroethylene and 1,1-chlorofluoroethylene or a terpolymer of vinylidene fluoride, hexafluoropropene and tetrafluoroethylene.

Acrylic-based polymers are polymers comprising repetitive units derived from a monomer **M2** of formula R¹R²C=C(R³)((X¹)ₚC(O)R⁴) wherein the substituents R¹, R² et R³ are independently selected from the group consisting of H, CO₂H et C₁-C₅ alkyl ; R⁴ is selected from the group consisting of -NHC(CH₃)₂CH₂C(O)CH₃ and -OR⁵ wherein R⁵ is selected from the group consisting of H and C₁-C₁₈ alkyl optionally substituted by one or more functional groups -OH, -CO₂H, -SO₃H, -PO₃H, -OC(O)R⁶, -C(O)O-R⁶ or a heterocycle having five or six membered ring comprising at least one nitrogen atom in the backbone ; R⁶ being selected from the group consisting of C₁-C₆ alkyl and C₆-C₁₂ aryl optionally substituted by one or more functional groups - OH, -CO₂H, -SO₃H, -PO₃H; p is 0 or 1; X¹ is selected from the group consisting of -[-C(O)OC(R⁷)(R⁸)C(R⁹)(R¹⁰)-]_{w1}- and C₁-C₁₀ alkyl optionally substituted by one or more functional groups -OH, -CO₂H or ester(s) ; w1 is an integer of from 1 to 50, advantageously from 1 to 25, preferably from 1 to 10, in particular from 1 to 5 ; R⁷, R⁸, R⁹, R¹⁰ are independently from each other and independently for each unit w1 selected from the group consisting of H and C₁-C₅ alkyl. Said heterocycle can be saturated or unsaturated or aromatic. Said heterocycle can be monocyclic or bicyclic. Said heterocycle can be a pyrrole, pyrrolidine, pyridine, piperidine, pyrimidine, pyrazine, 1,4-dihydropyridine, indole, oxindole, isatine, quinoline, isoquinoline, quinazoline, imidazoline, pyrazolidine, 2-pyrrolidone, deltalactam, succinimide, 2-imidazolidinone, 4-imidazolidinone. Said heterocycle can be substituted by one or more C₁-C₅ alkyl groups. As mentioned above, C₁-C₁₈ alkyl group is optionally substituted by said heterocycle. The latter can be linked to the alkyl chain by the nitrogen atom or any other atom forming the heterocycle. Preferably the heterocycle is 2-pyrrolidone, delta-lactam, succinimide, 2-imidazolidinone, 4-imidazolidinone. Preferably, said monomer **M2** is of formula R¹R²C=C(R³)(C(O)R⁴) wherein the substituents R¹, R² and R³ are independently selected from the group consisting of H, CO₂H et C₁-C₅ alkyl ; R⁴ is -OR⁵ with R⁵ selected from the group consisting of H and C₁-C₁₀ alkyl optionally substituted by one or more functional groups - OH, -CO₂H, -SO₃H, -PO₃H, -OC(O)R⁶, or -C(O)O-R⁶ ; R⁶ being selected from the group consisting of C₁-C₆ alkyl or C₆-C₁₂ aryl optionally substituted by one or more functional groups -OH, -CO₂H, -SO₃H, -PO₃H. In particular, said monomer **M2** is of formula R¹R²C=C(R³)(C(O)R⁴) wherein the substituents R¹, R² and R³ are independently selected from the group consisting of H, CO₂H et C₁-C₃ alkyl; R⁴ is -OR⁵ with R⁵ selected from the group consisting of H and C₁-C₅ alkyl optionally substituted by one or more functional groups -OH, - CO₂H, -SO₃H, -PO₃H, -OC(O)R⁶, or -C(O)O-R⁶ ; R⁶ being selected from the group consisting of C₁-C₆ alkyl or C₆-C₁₂ aryl optionally substituted by one or more functional groups -OH, -CO₂H, -SO₃H, -PO₃H. More particularly, said monomer **M2** may be acrylic acid, methyl acrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, hydroxypropyl methacrylate, hydroxybutyl methacrylate, hydroxyethyl methacrylate, hydroxyethyl acrylate, acrylate hydroxypropyl acrylate, hydroxybutyl acrylate, methyl acrylic acid, methyl methacrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, ureido methacrylate, monomers of formula CH₂=CH(CO₂CH₂CH₂CO₂H), CH₂=CH(CO₂CH₂CH₂-O-C(O)-CH₂CH₂CO₂H), CH₂=CH(CO₂CH₂CH₂CH₂-O-C(O)-CH₂CH₂CO₂H), CH₂=CH(CO₂CH(CH₃)CH₂-O-C(O)-CH₂CH₂CO₂H),CH₂=CH(CO₂CH₂CH₂-O-C(O)-C₆H₄CO₂H), CH₂=CH(CO₂CH₂CH₂CH₂CH(CO₂H)CH₂CH₂CO₂H) ; and mixtures thereof.

Polyacrylamide are polymers of formula R¹R²C=CR³(C(O)NR⁴R⁵) wherein R¹, R² et R³ are independently selected from the group consisting of H and C₁-C₅ alkyl, preferably selected from H and CH₃ ; R⁴ et R⁵ are, independently selected from the group consisting of H and C₁-C₁₀ alkyl optionally substituted by one or more functional group(s)-OH, -CO₂H, SO₃H, -OPO₃²⁻, -C(O)OR⁶, -OC(O)R⁶ wherein R⁶ is selected from C₁-C₅ alkyl et C₆-C₁₂ aryl.

Polyacrylonitrile are polymers of formula R¹R²C=CR³(CN) wherein R¹, R² and R³ are independently selected from the group consisting of H and C₁-C₅ alkyl, preferably selected from H and CH₃.

ABS or SBR refers to acrylonitrile butadiene styrene polymers and SBR refers styrene butadiene rubber. Copolymers of vinylidene fluoride and functionalized vinyl monomer refers to copolymers comprising repetitive units derived from vinylidene fluoride and one or more monomer(s) **M2** as defined above.

If the coating according to the present invention further comprises a polymer **P2** as defined above, the coating can be prepared by dissolving the polymer **P2** and the copolyamide as defined in the present invention in an organic solvent.

### Separator

The coating according to the present invention can be used as one of the materials used for the preparation of a separator in an electrochemical device. The electrochemical device is selected from the group: Li-ion secondary battery, capacitor, double layer electric capacitor, and membrane electrode assembly (AME) for fuel cell, preferably Li-ion secondary battery. Said coating is preferably used as one of the components of the separator of a secondary battery, preferably secondary Li-ion battery.

The separator may therefore contain a porous support onto which a layer **L1** comprising said coating according to the present invention is applied.

There is no particular limitation in the choice of the support as long as it is a porous substrate having pores. The porous support can take the form of a membrane or fibrous tissue. When the porous support is fibrous, it may be a non-woven veil forming a porous veil, such as a veil obtained by direct spinning or melt-blowing (type "spunbond" or "melt blown") or electro-spinning. Examples of porous support useful in the invention as a carrier include, but are not limited to: polyolefins, polyethylene terephthalate, polybutylene terephthalate, polyester, polyacetal, polyamide, polycarbonate, polyimide, polyetheretherketone, polyether sulfone, poly(phenylene oxide), poly(phenylene sulfide), polyethylene naphthalene or mixtures thereof. However, other heat-resistant engineering plastics can be used without any particular limitation. Non-woven materials made of natural and synthetic materials can also be used as a substrate for the separator. The porous support is generally 1 to 50 µm thick and is typically membrane obtained by extrusion and drawing (wet or dry processes) or nonwoven castings. The porous support preferably has a porosity between 5% and 95%. The average pore size (diameter) is preferably between 0.001 and 50 microns, preferably between 0.01 and 10 microns.

The layer **L1** may further contain inorganic particles that serve to form micropores (the gaps between inorganic particles). The addition of inorganic particles can also contribute to heat resistance or improve wettability. According to one embodiment, said coating comprises from 30 to 99 wt% of inorganic particles, relative to the weight of the coating. These inorganic particles must be electrochemically stable (not subject to oxidation and/or reduction in the range of voltages used). In addition, powdery inorganic materials preferably have high ionic conductivity. Low-density materials are preferred over higher-density materials, as the weight of the battery produced can be reduced. The dielectric constant is preferably equal to or greater than 5. According to one embodiment, said inorganic particles are selected from the group consisting of: BaTiO₃, Pb(Zr,Ti)O₃, Pb₁₋ₓLaₓZr_{y}O₃ (0<x<1, 0<y<1), PbMg₃Nb_{2/3}O₃, PbTiO₃, HfO, HfO₂, SrTiO₃, SnO₂, CeO₂, MgO, NiO, CaO, ZnO, Y₂O₃, bohemite (y-AlO (OH)), Al₂O₃, TiO₂, SiC, ZrO₂, boron silicate, BaSO₄, nanoclays, or mixtures thereof. Preferably said coating may comprise from 0.5 to 40wt% of the binder and from 60 to 99.5wt% of inorganic particles.

The layer **L1** may have a thickness of less than 5 µm, advantageously of less than 4.5 µm, preferably less than 4.0 µm, more preferably of less than 3.5 µm, most preferably less than 3.0 µm, in particular less than 2.5 µm, more particularly less than 2.0 µm, most particularly less than 1.5 µm.

Preferably, the whole separator may have a thickness of less than 55 µm, advantageously of less than 50 µm, preferably less than 45 µm, more preferably of less than 40 µm, most preferably less than 30 µm, in particular less than 20 µm, more particularly less than 15 µm, most particularly less than 10 µm.

The coating used to prepare the layer **L1** may optionally comprise from 0.1 to 10wt%, of additives, selected from thickeners, pH adjusting agents, anti-sedimentation agents, surfactants, wetting agents, fillers, antifoaming agents and promoters of fugitive adhesion or not. The fillers mentioned here in the additives are different from the inorganic particles mentioned above.

Alternatively, the separator comprises a base layer **L1'** and a top layer L2'; wherein the base layer **L1'** comprises a porous support onto which a binder is applied and optionally inorganic particles and wherein the top layer **L2'** comprises said coating according to the present invention. During the production of a battery, the separator and the electrode are placed on top of each other, and pressure is applied to the assembly to allow the two elements to stick together. The top layer **L2'** improves the adhesion of the base layer **L1'** in order to maintain an adequate cohesion between the separator and the electrode (either cathode or anode).

The base layer **L1'** comprises a porous support onto which a binder and optionally inorganic particles is applied. There is no particular limitation in the choice of the support as long as it is a porous substrate having pores. The porous support can take the form of a membrane or fibrous tissue. When the porous support is fibrous, it may be a non-woven veil forming a porous veil, such as a veil obtained by direct spinning or melt-blowing (type "spunbond" or "melt blown") or electro-spinning. Examples of porous support useful in the invention as a carrier include, but are not limited to: polyolefins, polyethylene terephthalate, polybutylene terephthalate, polyester, polyacetal, polyamide, polycarbonate, polyimide, polyetheretherketone, polyether sulfone, poly(phenylene oxide), poly(phenylene sulfide), polyethylene naphthalene or mixtures thereof. However, other heat-resistant engineering plastics can be used without any particular limitation. Non-woven materials made of natural and synthetic materials can also be used as a substrate for the separator. The porous support is generally 1 to 50 µm thick and is typically membrane obtained by extrusion and drawing (wet or dry processes) or nonwoven castings. The porous support preferably has a porosity between 5% and 95%. The average pore size (diameter) is preferably between 0.001 and 50 microns, preferably between 0.01 and 10 microns. The binder can be based on fluoropolymers such polyvinylidene fluoride, polyacrylamide, polyacrylonitrile, ABS or SBR polymers, copolymer of vinylidene fluoride and hexafluoropropene and/or acrylic-based polymers as defined in the present application.

The top layer **L2'** may have a thickness of less than 5 µm, advantageously of less than 4.5 µm, preferably less than 4.0 µm, more preferably of less than 3.5 µm, most preferably less than 3.0 µm, in particular less than 2.5 µm, more particularly less than 2.0 µm, most particularly less than 1.5 µm.

### Battery

In another aspect of the present invention, a secondary battery is provided. Said battery comprises the separator according to the present invention, a cathode and an anode.

The electrode, either the cathode or the anode, comprises a binder, an active material and optionally a conductive agent.

In a preferred embodiment, the electrode has the following mass composition:
a. 50 % to 99.95 % active material, preferably 50 % to 99 %,
b. 25 % to 0 % conductive agent, preferably 25 % to 0.5 %,
c. 25 % to 0.05 % of a binder, preferably 25 % to 0.5 %,
d. 0 % to 5 % at least one additive selected from the group consisting of a plasticizer, an ionic liquid, a dispersing agent for conductive additive, and an auxiliary flow agent; the sum of all these percentages being 100%.

There is no limitation on the components used as binder in the electrode; and the binder can be based on fluoropolymers such polyvinylidene fluoride, polyacrylamide, polyacrylonitrile, ABS or SBR polymers, acrylic-based polymers, copolymers of vinylidene fluoride and a hydrophilic monomer such as acrylic acid, carboxyethylacrylate, hydroxyethyl acrylate, hydroethylmethacrylate, acryloyloxypropyl succinate or acryloyloxyethyl succinate.

The conductive agents in the electrode are composed of one or more materials that can improve conductivity. Some examples include carbon blacks such as acetylene black, Ketjen black; carbon fibers, such as a carbon nanotube, a carbon nanofiber, a carbon fiber by vapor growth; metal powders such as SUS powder, and aluminum powder.

Active materials are materials that are able to store and release lithium ions.

In a preferred embodiment, the electrode is a negative electrode, i.e. the anode. In that embodiment, said active material is selected from the group consisting of a lithium alloy, a metal oxide, a carbon material such as graphite or hard carbon, silicon, a silicon alloy and Li₄Ti₅O₁₂. The shape of the negative electrode active material is not particularly limited but is preferably particulate.

In another preferred embodiment, said electrode is a positive electrode, i.e. the cathode. Preferably, for a cathode, said active material is selected from the group consisting of LiCoO₂, Li (Ni,Co,Al)O₂, Li₍₁₊ₓ₎NiₐMn_{b}Co_{c} (x represents a real number of 0 or more, a = 0.8, 0.6, 0.5, or 1/3, b = 0.1, 0.2, 0.3, or 1/3, c = 0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a spinel Li Mn substituted by a different element having a composition represented by Li_{1+xM}n_{2-x-y}M_{y}O₄, M representing at least one metal selected from Al, Mg, Co, Fe, Ni, and Zn, x and y independently representing a real number between 0 and 2, lithium titanate LiₓTiO_{y} - x and y independently representing a real number between 0 and 2, and a metal and lithium phosphate having a composition represented by LiMPO₄, M representing Fe, Mn, Co, or Ni. In addition, the surface of each of the materials described above can be coated. The coating material is not particularly limited as long as it has lithium-ion conductivity and contains a material that can be held as a coating layer on the surface of the active material. Examples of the coating material include LiNbO₃, Li₄Ti₅O₁₂, and Li₃PO₄. The shape of the cathode active material is not particularly limited but is preferably particulate.

Said cathode and/or said anode may be prepared by a process with or without solvent according to known processes.

## Claims

1. Coating for separator of a secondary battery comprising at least one copolyamide comprising at least two different repetitive units derived from **M1** and **M1',** wherein **M1** is of formula (Ca diamine **DA1).(**Cb diacid **DA2)** and **M1'** is selected from the group consisting of an amino acid, a lactam and a formula (Ca' diamine **DA1**').(Cb' diacid **DA2');**
wherein a and a' represent the number of carbon atoms of the diamine ;
b and b' represent the number of carbon atoms of the diacid ;
a and b each being independently from 8 to 50 ;
a' and b' each being independently from 4 to 36 ;
wherein the diamine **DA1** is a secondary diamine comprising two amine groups, wherein both amine groups are secondary amine groups with two substituents different from hydrogen bound to the nitrogen atom.

2. Coating according to any one of the previous claims wherein the Ca diamine **DA1** is selected from the group consisting of piperazine, 4,4'-trimethylenepiperidine, 4,4'-methylenebis(N-1-methylpropyl) cyclohexanamine, 4,4'-methylenebis(N-1-methylpropyl)-3,3'-dimethylcyclohexanamine, 3,3,5-trimethyl-N-(propan-2-yl)-5-[(propan-2-ylamino)methyl]cyclohexamine and N,N'-di(3,3-dimethyl-2-butyl)-1,6-diaminohexane).

3. Coating according to any one of the previous claims wherein the Cb diacid **DA2** is selected from the group consisting of aliphatic diacids, which may be linear or branched, cycloaliphatic diacids and aromatic diacids.

4. Coating according to any one of the previous claims 1 to 3 wherein **M1'** is an amino acid selected from the group consisting of 9-aminononanoic acid, 10-aminodecanoic acid, 10-aminoundecanoic acid, 11-aminoundecanoic acid and 12-aminododecanoic acid, as well as its derivatives, notably N-heptyl-11-aminoundecanoic acid.

5. Coating according to any one of the previous claims 1 to 3 wherein **M1'** is a lactam selected from the group consisting of pyrrolidinone, 2-piperidinone, caprolactam, enantholactam, caprylolactam, pelargolactam, decanolactam, undecanolactam, and lauryllactam.

6. Coating according to any one of the previous claims 1 to 3 wherein **M1'** is of formula (Ca' diamine **DA1**').(Cb' diacid **DA2')** wherein **DA1'** is selected from the group consisting of a linear or branched aliphatic diamine, a cycloaliphatic diamine, or an alkylaromatic diamine ; **DA2'** is selected from the group consisting of aliphatic diacids, which may be linear or branched, cycloaliphatic diacids and aromatic diacids and is different from **DA2.**

7. Coating according to any one of the previous claims wherein said copolyamide comprises at least two different repetitive units derived from **M1** and **M1'** at a proportion by weight from 5 to 60% by weight, and preferably from 10 to 50 % by weight relative to all the polyamide units.

8. Coating according to any one of the previous claims wherein said copolyamide have a melt volume-flow rate (MVR) at 160°C under 2.16 kg from 2 to 300 cm³/10 min, preferably from 3 to 250 cm³/10 min.

9. Coating according to any one of the previous claims wherein said coating further comprises a polymer **P2** selected from the group consisting of fluoropolymers, polyacrylamide, polyacrylonitrile, ABS or SBR polymers, acrylic-based polymers, copolymers of vinylidene fluoride and functionalized vinyl monomer.

10. Separator for secondary battery comprising the coating according to any one of the previous claims 1 to 9.

11. Separator according to the previous claim wherein said separator comprises a porous support onto which a layer **L1** comprising said coating according to any one of the previous claims 1 to 9 is applied.

12. Separator according to any one of the previous claims 9 or 11 wherein said layer **L1** further comprises inorganic particles.

13. Separator according to claim 9 comprising a base layer **L1'** and a top layer **L2'** applied onto the base layer **L1';** wherein the base layer **L1'** comprises a porous support onto which a binder and optionally inorganic particles is applied and wherein the top layer **L2'** comprises said coating according to any one of the previous claims 1 to 8.

14. Separator according to the previous claims 11 to 13 wherein said top layer **L2'** has a thickness of less than 5 µm or said layer **L1** has a thickness of less than 5 µm.

15. Secondary battery comprising a cathode, an anode and a separator disposed between the anode and the cathode, said separator being according to any one of the previous claims 9 to 14.
